# EUROPEAN PATENT APPLICATION

(11) **EP 4 589 173 A1**
(43) Date of publication of application: **23.07.2025**
(21) Application number: 24461514.2
(22) Date of filing: 18.01.2024
(51) Int. Cl.: F16H 49/00, F16C 19/28, F16C 33/37

(54) **STRAIN WAVE DRIVE BEARING ASSEMBLY**

(71) Applicant: Goodrich Actuation Systems Limited, Wolverhampton, West Midlands WV10 7EH (GB)
(72) Inventor: TUREK, Lukasz, 51-317 Wroclaw (PL); DARBY, Jonathan Alan, 51-317 Wroclaw (PL); CHMIELEWSKI, Pawel, 51-317 Wroclaw (PL)
(74) Representative: Dehns

(57) **Abstract**

A bearing assembly for a strain wave drive, comprising a full complement of bearing components (200) arranged to be mounted closely adjacent each other around the peripheral extent of a wave generator (100), the number of bearing components being the maximum number of said bearing components that can be accommodated in the peripheral extent. Also provided is a strain wave drive comprising: a wave generator arranged to rotate about an axis and having an elliptical cross-section; a flex spline mounted around the wave generator; and a bearing assembly as described above, located around the wave generator between the wave generator and the flex spline.

## Description

### TECHNICAL FIELD

The present disclosure relates to a strain wave drive, for example a strain wave drive for rotary actuation of flight control surfaces of an aircraft and, particularly, a bearing assembly for a strain wave drive.

### BACKGROUND

Rotary actuation of devices or surfaces e.g. flight control surfaces in an aircraft, requires high torque drive and so typically requires gearing between the electric motor, which is typically high speed, low torque, and the output shaft of the actuator that drives the surface. Conventional involute gears, comprising a number of intermeshing toothed wheels to create the required gear ratio, are relatively large and heavy and the higher the required ratio, the more gears and, thus, the greater the size and weight of the overall actuator system.

In aircraft in particular, and also in other applications, there is a need to minimise the size and weight of components and there is a desire to provide a gear or drive that can provide the required torque ratio using a smaller, lighter, more compact arrangement.

A known type of gear mechanism that is particularly compact is the strain wave drive or gear. Strain wave gearing, also known as a harmonic drive, is used in many drive trains as it is compact and lightweight and can be used to provide a high gear ratio between an input or drive shaft and an output shaft. These properties make strain wave gearing suited to use in aircraft and other vehicles where space is limited and weight of components should be minimised, whilst maintaining reliability and performance.

A strain wave gear system includes a wave generator which is in the form of an elliptical shaft and a compliant bearing in which the elliptical shaft rotates. A flexible toothed ring (a flex spline) is mounted about the wave generator. A fixed outer ring, or circular spline is provided around the flex spline and has inner teeth that engage with the outer teeth of the flex spline but, due to the elliptical shape of the wave generator, the flex spline only engages with the teeth of the outer ring at the major diameter of the wave generator.

In operation, a drive shaft, connected to the wave generator, is rotated e.g. by a motor, which causes rotation of the wave generator. The bearing conforms to the elliptical shape of the wave generator. The flex spline conforms to the shape of the wave generator though the compliant bearing so as it rotates, the flex spline will only engage with the inner teeth of the outer ring at the major axes of the ellipse. The circular spline has a different number of inner teeth to the number of outer teeth of the flex spline. Rotation of the wave generator thus causes a slower rotation of the output shaft by its engagement with the flex spline. The output shaft is connected to the device or surface to be moved by the actuator.

The bearing component of a strain wave drive plays a crucial role in enabling the transmission of motion from the input shaft to the output shaft with high precision and reliability, low friction and minimal backlash. The bearings need to be conformable to compensate for the eccentricity of the wave generator, ensuring the flex spline remains in contact with the circular spline throughout the motion cycle.

Current bearing assemblies, as described further below, typically have a one-piece machined cage, often complex in design, and this can affect the performance and design flexibility of the bearing. Such cages may have limited load and torque capacity, size and material constraints, high manufacturing, maintenance and repair costs and are limited to the extent to which they can be customised.

There is a need for an improved strain wave bearing design which is more robust than current designs and addresses the above issues..

### SUMMARY

According to the disclosure, there is provided a bearing assembly for a strain wave drive, comprising a full complement of bearing components arranged to be mounted closely adjacent each other around the peripheral extent of a wave generator, the number of bearing components being the maximum number of said bearing components that can be accommodated in the peripheral extent.

The bearing components may comprise rollers arranged in a circumferentially side-by-side arrangement around the peripheral extent close enough to each other to secure the bearing components in place without additional securing means.

The bearing components may comprise a plurality of rollers which rotate about their own axis and a plurality of idler rollers located adjacent ones of said rollers, the idler rollers configured rotate in a direction opposite to the direction in which the rollers rotate about their own axis. The idler rollers may have a smaller diameter than the rollers. This arrangement, with idler rollers, can reduce friction and improve efficiency, but because fewer rollers will be carrying the load (due to the idler rollers taking up space) the bearing capability may be reduced.

Also provided is a strain wave drive comprising: a wave generator arranged to rotate about an axis and having an elliptical cross-section; a flex spline mounted around the wave generator; and a bearing assembly as defined above, located around the wave generator between the wave generator and the flex spline.

The strain wave drive may further comprise an output spline arranged around the flex spline, the output spline driven by the wave generator via the bearing assembly and the flex spline. The strain wave drive may further comprise an earth spline arranged either side of the output spline.

The bearing assembly may comprise a plurality e.g. two, four or more (preferably an even number) of adjacent rows, in the axial direction, of circumferentially mounted bearing components.

The wave generator may be provided with one or more circumferential grooves defined by radially extending walls, within which the or each set of bearing components forming a row around the circumference of the wave generator is accommodated.

In examples, the wave generator has a conical interior shape at its ends and/or is provided with cut-outs in its walls.

### BRIEF DESCRIPTION

Examples of the strain wave drive according to the disclosure will now be described with reference to the drawings. It should be noted that these are examples only and variations are possible within the scope of the claims.
Figure 1A shows a cross-section through a known type of strain wave drive.
Figure 1B is an exploded view of the main components of the strain wave drive of Fig. 1A.
Figure 2A shows a 3D view of a known wave generator.
Figure 2B shows an end view of the wave generator of Fig. 2A.
Figure 3A shows a 3D view of a modified wave generator according to an example according to this disclosure.
Figure 3B shows an end view of the wave generator of Fig. 3A.
Figure 4A shows a known wave generator and bearing arrangement.
Figure 4B shows a detail of the bearing arrangement of Fig. 4A.
Figure 5A shows an example of a modified wave generator and bearing arrangement according to this disclosure.
Figure 5B shows a detail of the bearing arrangement of Fig. 5A.
Figure 5C shows an alternative bearing arrangement.
Figure 6A is a cut-away view of a strain wave drive according to this disclosure.
Figure 6B shows a close-up detail of the strain wave drive of Fig. 6A.
Figure 7 shows an alternative to the arrangement shown in Figure 6B.

### DETAILED DESCRIPTION

As mentioned above, conventional drives for moving e.g. flight control surfaces in aircraft, have used a series of inter-meshing gear wheels. In an attempt to reduce the overall size and weight of the gearing, thought has been given to the use of the more compact strain wave gears or drives (also known as harmonic drives). Such strain wave drives essentially consist of three main parts: a wave generator 1, driven by the motor drive shaft, is an elliptical shaft having bearings 2 arranged around the outer perimeter thereof. The wave generator may be attached to the motor drive shaft using a keyed connection 8. The wave generator is located within a cylindrical flex spline 3 which is a flexible annular component having radially outwardly extending teeth 4. The flex spline is sufficiently flexible to take up the elliptical shape of the wave generator as the wave generator and its bearings rotate within the flex spline. A rigid circular spline 5 is a ring that fits around the flex spline. The circular spline has inwardly extending teeth 7. The circular spline is typically fixed e.g. to the actuator housing. As the wave generator is rotated by the motor, it causes the flex spline to take up the elliptical shape such that the outwardly extending teeth of the flex spline mesh with the inwardly extending teeth of the circular spline at the locations of the major axis of the ellipse. The circular spline typically has more teeth than the flex spline such that as the teeth engage, the flex spline is caused to rotate relative to the circular spline at a rate of rotation different to that of the motor. In other applications, the circular spline may be an output ring gear positioned around the flex spline. The output ring gear is provided with inner teeth that engage with the teeth of the flex spline. As the flex spline deforms due to rotation of the wave generator inside it, its teeth engage with the inwardly protruding teeth of the output ring and, due to the elliptical movement of the point of engagement, this causes the output ring gear to rotate according to the gear ratio.

The output ring gear is connected with a part or component to be moved by the drive.

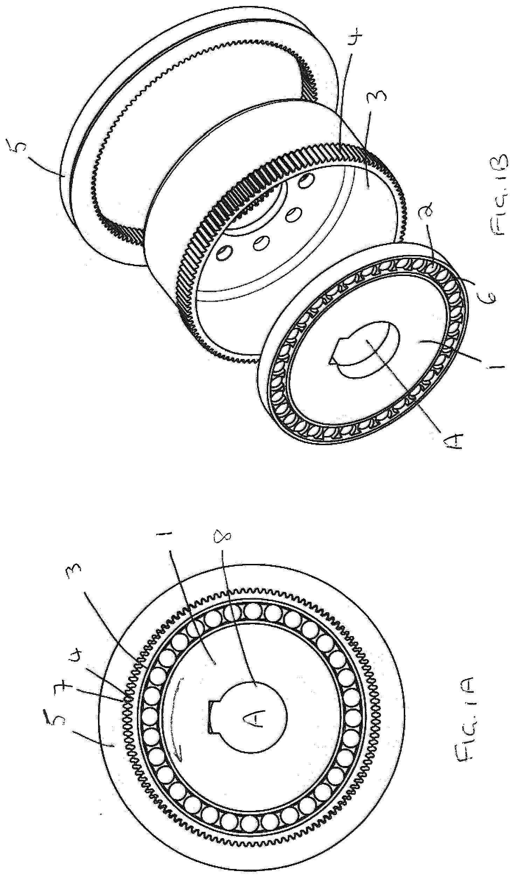

Figures 1A and 1B show, respectively, a section and an exploded view of the strain wave drive, showing the wave generator 1, rotatable about axis A. Ball bearings 2 are provided around the perimeter of the wave generator 1 in a thin race 6. The flex spline 3 is fitted around the wave generator to engage with the bearings to take up the elliptical shape of the wave generator. Teeth 4 on the outer surface of the flex spline 3 engage, at certain positions of rotation, with inwardly extending teeth 7 of the output ring gear 5. Earth gears may be fixed relative to the actuator housing or other fixed component and the flex spline may engage with an output shaft or output ring gear 5 which is caused to rotate with rotation of the point of engagement with the flex spline as the wave generator rotates. The output gear rotates according to the gear ratio and may be fixed to a part or surface to be rotated e.g. a flight control surface.

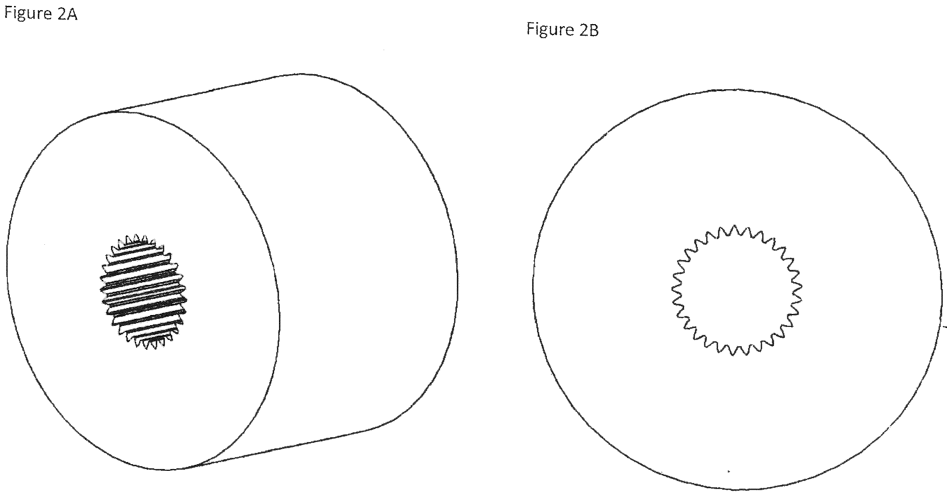

An example of a typical wave generator 1 is shown in Figs. 2A and 2B. Where the bearing is in the form of ball bearings, as shown in Figs. 1A and 1B, these are mounted in a race to the outer periphery of the wave generator 1. A main cause of failure of the wave generator is due to damage to or pitting in the outer surface of the wave generator by the rolling bearing elements (here the balls) in contact with that surface. Further, the thin bearing race can break under excessive loading. Particularly where the number of bearings is limited due to space constraints, the thin race is vulnerable to breakage or damage. The bearing assembly, therefore, becomes a major failure point.

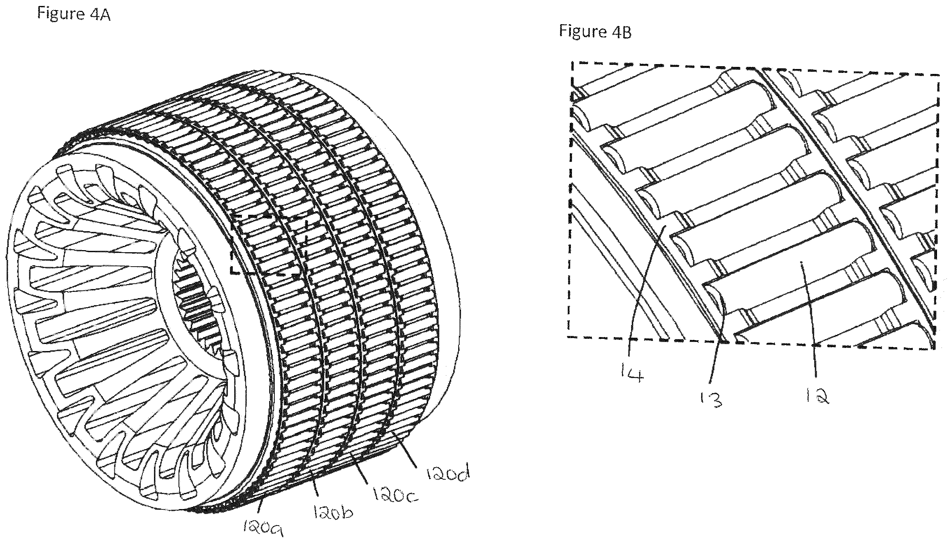

In another example, the bearing assembly may be in the form of needle roller bearings as shown in Figs. 4A and 4B. Here, the bearings 12 are rollers that are mounted into slots 13 in a bearing cage 14 (e.g. a metal (steel) cage). Each individual roller 12 can rotate about its own longitudinal axis within the respective slot of the cage. In the example shown, four bearing races 120a, 120b, 120c, 120d, each having a respective cage 14 defining slots 13 in which rollers 12 are rotatably mounted. The bearing races are mounted around the exterior of the wave generator in side-by-side arrangement when viewed from the axial direction. This arrangement provides a bearing surface around the wave generator for engagement with the flex spline that, in use, is mounted over the bearing surface. As the cages are arranged side-by-side, no separating rings or flanges are required between them. Other examples may have different numbers of side-by-side races.

The strain wave drive modified according to this disclosure uses a bearing assembly described here as a 'full complement' design, in which all of the available peripheral length around the wave generator is taken up by rolling elements - i.e. the number of rolling elements for each set or race around the wave generator 100 is the maximum possible number that can fit into that peripheral extent (taking into account any dimensional tolerances of the roller elements).

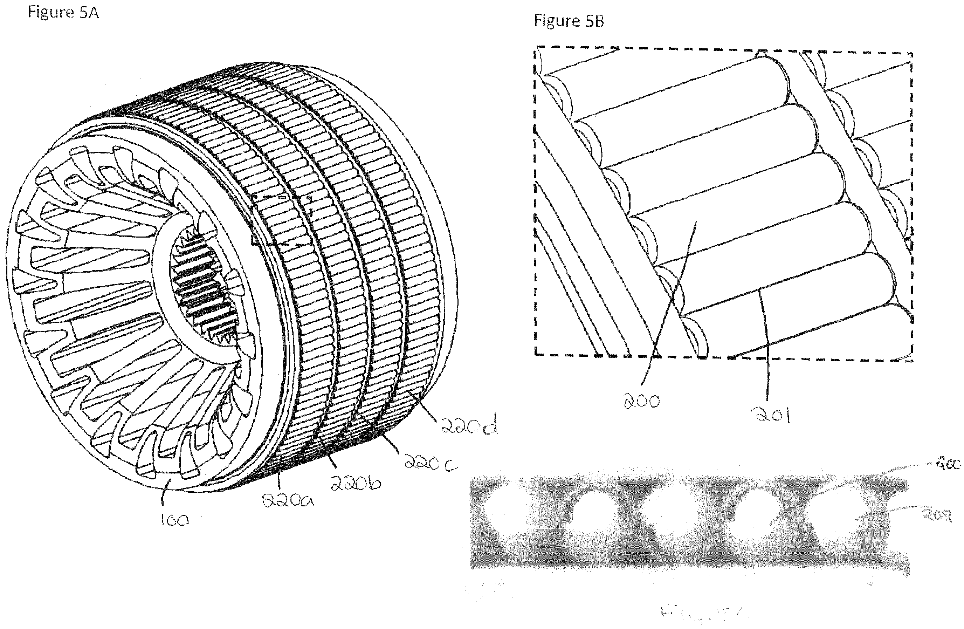

An example of this solution is shown in Figs. 5A and 5B, where a plurality of roller elements 200 is packed in circumferentially side-by-side arrangement to fill the entire circumferential extent without leaving any substantial gaps (other than small gaps 201 between roller elements for dimensional tolerances). The tight packing - i.e. the full complement arrangement, means that the roller elements are retained around the wave generator circumference without the need for a cage or other holders which would otherwise take up space.

In the example shown, as with the example of Figs. 4A and 4B, four sets of needle rollers 220a, 220b, 220c, 220d are provided axially side-by-side across the wave generator. As will be explained later, this corresponds to the output and earth rings with which the flex spline engages, in operation, with the middle two sets 220b, 220c engaging with the output ring, It is also conceivable that only two sets of bearings, or more than four sets may also be used.

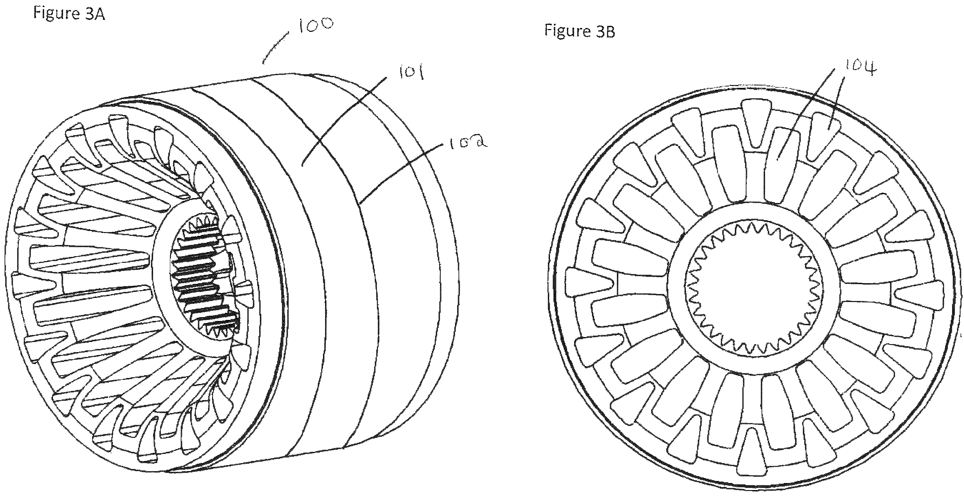

Whilst it may be feasible to mount the full complement sets of bearings onto a conventional wave generator such as shown in Figs. 2A and 2B, performance is improved by using a wave generator 100 that is formed with circumferential grooves 101 or tracks separated by walls or flanges 102 such as shown in Figs. 3A and 3B such that the tracks are an integral part of the wave generator 100 to which the bearing sets 200 can be mounted.

In the example shown, the roller elements are all needle roller bearings which rotate about their roller axes. In other examples, some of these elements may be idler rollers 202 as shown in Figure 5C, that do not rotate with the needle roller bearings, or rotate in the opposite direction. For example, the elements may include alternately arranged needle roller bearings and idler rollers around the wave generator circumference. The idler rollers may be smaller in diameter than the needle roller bearings and may act as spacers to hold the needle rollers in place. This can reduce the effects of friction between the rollers compared to all needle roller bearings.

The wave generator can be further improved by having a design formed with cutout portions 104 and/or a conical interior shape at its ends, as shown in Figs. 3A and 3B to reduce the overall amount of material used and, therefore, reduce weight of the wave generator.

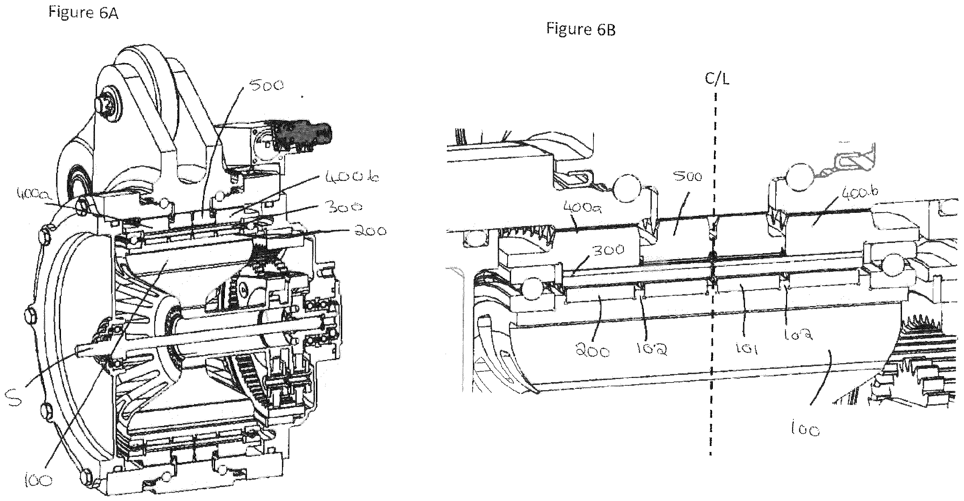

Figs. 6A and 6B show how a design as described above can be used, in practice. Fig 6A shows a wave generator 100 such as shown in Figs. 3A and 3B. The strain wave drive engages with an output spline 500 and, axially either side of the ground spline 500, two ground or earth splines 400a, 400b, via the sets of needle roller bearings 200 and the flex spline 300.

The sets of needle rollers 200 are arranged as two mirrored sides about a centre line CL. In the examples shown, with four sets of needle rollers, two are on each side of the centre line CL. On each side, the axially outer set of needle rollers supports the flex spline interface with the respective ground spline 400a, 400b and the axially inner set supports the flex spline interface with the output spline 500. The interface between the common flex spline and the single output spline is, therefore, supported by the inner set of bearings of both sides.

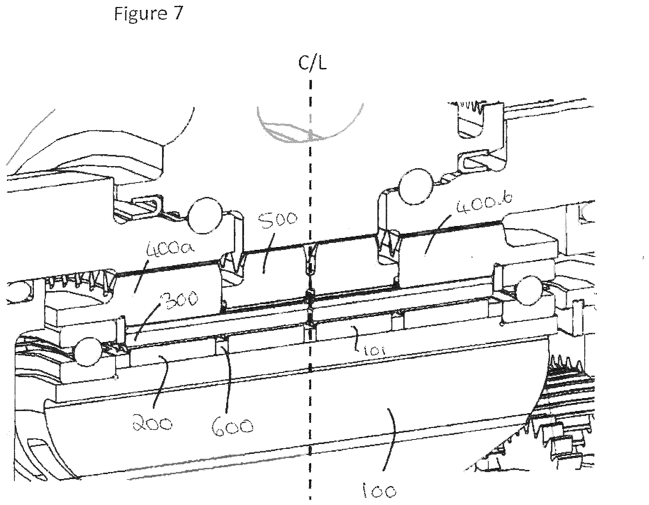

In the alternative arrangement shown in Fig. 7, a spacer 600 may be provided between adjacent bearings.

The full complement bearing design, in allowing more rollers to be in contact with the flex spline and the wave generator raceways (in some examples), provides for a higher load capacity than current bearing assemblies. The increased direct contact between the rollers and the other parts results in increased rigidity and better loading support. The arrangement also has enhanced positional accuracy and repeatability. Further, because more rollers are now sharing the same load, the wear on the rollers is reduced. By no longer requiring a complex cage for the bearings, cost and complexity of manufacture, assembly and repair is reduced and reliability and longevity are increased.

## Claims

1. A bearing assembly for a strain wave drive, comprising a full complement of bearing components (200) arranged to be mounted closely adjacent each other around the peripheral extent of a wave generator (100), the number of bearing components being the maximum number of said bearing components that can be accommodated in the peripheral extent.

2. The bearing assembly of claim 1, wherein the bearing components comprise rollers (200) arranged in a circumferentially side-by-side arrangement around the peripheral extent close enough to each other to secure the bearing components in place without additional securing means.

3. The bearing assembly of claim 2, the rollers each configured and arranged to roll about their own axis.

4. The bearing assembly claim 3, the bearing component comprising a plurality of said rollers and a plurality of idler rollers (202) located adjacent ones of said rollers, the idler rollers configured rotate in a direction opposite to the direction in which the rollers rotate about their own axis.

5. The bearing assembly of claim 4, wherein the idler rollers have a smaller diameter than the rollers.

6. The bearing assembly of claim 4 or 5, comprising one idler roller between each pair of circumferentially adjacent rollers.

7. A strain wave drive comprising:
a wave generator (100) arranged to rotate about an axis and having an elliptical cross-section;
a flex spline (300) mounted around the wave generator; and
a bearing assembly (200) as claimed in any preceding claim, located around the wave generator between the wave generator and the flex spline.

8. The strain wave drive of claim 7, further comprising an output spline (500) arranged around the flex spline, the output spline driven by the wave generator via the bearing assembly and the flex spline.

9. The strain wave drive of claim 8, further comprising an earth spline )400a, 400b) arranged either side of the output spline.

10. The strain wave drive of claim 7, 8 or 9, wherein the bearing assembly comprises a plurality of adjacent rows (220a, 220b, 220c, 220d), in the axial direction, of circumferentially mounted bearing components.

11. The strain wave drive of claim 10, the plurality of adjacent rows comprising four adjacent rows.

12. The strain wave drive of claim 10, the plurality of adjacent rows comprising two adjacent rows.

13. The strain wave drive of any of claims 7 to 12, wherein the wave generator is provided with one or more circumferential grooves (101) defined by radially extending walls (102), within which the or each set of bearing components forming a row around the circumference of the wave generator is accommodated.

14. The strain wave drive of any of claims 7 to 13, wherein the wave generator has a conical interior shape at its ends.

15. The strain wave drive of any of claims 7 to 12, wherein the wave generator is provided with cut-outs (104) in its walls.
